# EUROPÄISCHE PATENTANMELDUNG

(11) **EP 0 953 395 A1**
(43) Veröffentlichungstag der Anmeldung: **03.11.1999**
(21) Anmeldenummer: 99108238.9
(22) Anmeldetag: 27.04.1999
(51) Int. Cl.: B23D 3/06

(54) **Nutherstellungsmaschine**

(30) Priorität: 02.05.1998 DE 29807909 U
(71) Anmelder: Balzat Werkzeugmaschinenfabrik GmbH, 50170 Kerpen-Sindorf (DE)
(72) Erfinder: Balzat, Ernst, 53474 Bad Neuenahr (DE); Balzat, Edmund, 50170 Kerpen (DE); Ergert, Karl, 50226 Frechen (DE)
(74) Vertreter: Selting, Günther, Dipl.-Ing.

(57) **Zusammenfassung**

Die Nutherstellungsmaschine weist einen von einem Zylinder (48) axial bewegbaren Antriebskopf (10) auf, von dem ein Schaft (11) nach unten absteht. Der Schaft (11) trägt ein Werkzeug (12) mit einem seitlich ausfahrbaren Nutmesser (20). Die Steuerung des Nutmessers (20) erfolgt durch einen durch den Schaft (11) verlaufenden Stößel (17). Ein Antrieb (38) dient zur axialen Verstellung eines Steuerteils (30), das zwischen den Arbeitshüben nach unten bewegt wird, um den Stößel (17) für den nächsten Arbeitshub weiterzuschieben, damit das Nutmesser (20) ein Stück weiter ausgefahren wird. Zum Stoßen einer geschlossenen Nut (44), die an ihren Enden durch Schrägflächen begrenzt ist, ist eine ortsfeste Schablone (56) vorgesehen, die von einem Schieber (51) abgetastet wird. Der Schieber (51) verstellt in Abhängigkeit von der Kontur der Schablone (56) ein Übertragungselement (50), das den Abstand zwischen Steuerteil (30) und Schieber (51) entsprechend der Schablonenkontur verändert.

## Beschreibung

Die Erfindung betrifft eine Nutherstellungsmaschine zum Stoßen oder Ziehen längslaufender Nuten in die Innenwand von rohr- oder hülsenförmigen Werkstücken, und insbesondere eine Nutstoßmaschine zum Erzeugen "geschlossener" Nuten, also von Nuten, deren Länge durch stirnseitige Endflächen begrenzt ist (Kammernuten).

Aus dem Gebrauchsmuster DE 92 06 554 U1 ist ein Nutstoßwerkzeug bekannt, welches einen axial bewegbaren hohlen Schaft aufweist. Das Werkzeug ist ein selbstführendes zylindrisches Werkzeug, das in die Bohrung eines Werkstücks eingeführt werden kann und das ein seitlich ausfahrbares Nutmesser enthält. Wird der Schaft mit dem Werkzeug hin- und herbewegt, so wird das Nutmesser bei jedem Arbeitshub ein Stuck weiter ausgestellt, so daß es eine immer tiefer werdende Längsnut an der Innenseite des Werkstückes erzeugt. Das Herausdrücken des Nutmessers aus dem Schaft erfolgt durch einen im Schaft gesteuert bewegbaren Stößel, der mit einer Schrägfläche an einer Gegenfläche des Nutmessers angreift. Mit diesem Nutstoßwerkzeug können Nuten gestoßen werden, die sich über die gesamte Länge des rohrförmigen Werkstücks erstrecken.

Für bestimmte Anwendungen, wie beispielsweise bei Steuerrückwirkventilen für die Servolenkung, werden geschlossene Nuten benötigt, deren Nutlängen begrenzt sind und mit hoher Genauigkeit eingehalten werden müssen. Die Herstellung geschlossener (d.h. axial begrenzter) Innennuten an Werkstücken bringt erhebliche Probleme mit sich. Für die Herstellung geschlossener Nuten wurden das Nutpreßverfahren und das Strangpreßverfahren angewandt. Bei beiden ergeben sich ungenaue Nutenkanten. Als spanabhebendes Verfahren wurde das "Spechten" angewandt, bei dem eine über eine Exzenterscheibe angetriebene Kralle wie ein Spechtschnabel kurze Hackbewegungen ausführt. Auf diese Weise können aber nur kurze Buchsen genutet werden, weil andernfalls das Werkzeug nicht in das Werkstück eindringen kann.

Der Erfindung liegt die Aufgabe zugrunde, eine Nutherstellungsmaschine zu schaffen, die imstande ist, geschlossene Nuten mit hoher Präzision in einem Werkstück zu erzeugen.

Die Lösung dieser Aufgabe erfolgt erfindungsgemäß mit den im Anspruch 1 angegebenen Merkmalen.

Bei der erfindungsgemäßen Nutherstellungsmaschine ist ein Antriebskopf vorgesehen, der von einem Antrieb linear hin- und hergehend angetrieben ist. Von dem Antriebskopf steht ein Schaft ab, an dessen Ende das in das Werkstück eintauchende Werkzeug angebracht ist.

Dieses Werkzeug weist ein seitlich ausfahrbares Nutmesser auf, das bei jedem Arbeitshub des Schafts ausgefahren und bei jedem Rückhub in die Kontur des Werkzeugs eingefahren ist. Die Steuerung der Endflächen der auf diese Weise erzeugten Nut erfolgt durch eine Schablone, die von einem Schieber abgetastet wird. Diese Schablone wird bei jedem Hub und jedem Rückhub des Antriebskopfes abgefahren und von dem Schieber abgetastet. Ihre Form entspricht derjenigen der herzustellenden Nut. Da die Nut schrittweise in zahlreichen aufeinanderfolgenden Arbeitshüben des Schafts hergestellt wird, muß das Nutwerkzeug bei jedem Arbeitshub ein größeres Stück weit aus dem Werkzeug herausbewegt werden als bei dem vorhergehenden Arbeitshub. Diese Steuerung der Ausstellbewegung erfolgt durch das Steuerteil, das nach jedem Arbeitshub schrittweise verstellt wird. Somit bestimmt die Position des Steuerteils die Größe der Ausstellbewegung des Nutwerkzeugs, während die Schablone die Form und Länge der Nut bestimmt.

Mit der erfindungsgemäßen Nutherstellungsmaschine kann die Herstellung von Nuten an Werkstücken sehr schnell, effektiv und mit hoher Präsizion durchgeführt werden. Generell wäre es zwar möglich, bekannte Nutherstellungsmaschinen mit einer CNC-Steuerung in der Weise zu steuern, daß die gewünschte Nutform entsteht, jedoch würden dann die Arbeitshübe nicht mit der erforderlichen hohen. Geschwindigkeit ausgeführt werden können, weil eine derartig schnelle Verstellung des Nutmessers während eines Arbeitshubes bei einer CNC-gesteuerten Maschine nicht möglich ist. Die Schablonensteuerung ermöglicht es jedoch, die Nutstoßvorgänge mit hoher Frequenz durchzuführen. Dabei steuert die Schablonenform die Bewegung eines Übertragungselements, welches den Abstand zwischen Stößel und Steuerteil verändert. Auf diese Weise wird gewissermaßen die Lange des Stößels entsprechend der Schablonenkontur verändert, um während eines Arbeitshubes die Ausstellbewegung des Nutmessers zu steuern.

Ein besonderer Vorteil besteht darin, daß die Nutherstellungsmaschine auf der Basis bekannter Hochleistungs-Nutherstellungsmaschinen realisiert werden kann, ohne daß erhebliche bauliche Veränderungen vorgenommen werden müssen. Es ist lediglich erforderlich, das Übertragungselement und den dieses steuernden Schieber sowie eine Schablone vorzusehen.

Gemäß einer bevorzugten Weiterbildung der Erfindung ist der Schieber mit einem Anschlag auf eine Null-Position einstellbar, in der das Übertragungselement sich in axialer Ausrichtung mit dem Steuerteil und dem Stößel befindet. Diese Null-Position des Schiebers gibt die Stellung an, in der das Nutmesser in das Werkzeug eingefahren ist, und von der aus die übrigen Ausstellpositionen, die das Nutmesser anschließend einnimmt, definiert werden. Insbesondere ist es möglich, in der Null-Position das Steuerteil um seine Längsachse herum zu drehen, damit der nächste Einstellschritt für das Nutmesser vorbereitet werden kann, ohne daß eine übermäßige Reibung zwischen Übertragungselement und Steuerteil stattfindet.

Die erfindungsgemäße Nutherstellungsmaschine bietet auch die Möglichkeit des Konzepts einer Mehrkopfmaschine, bei der mehrere Werkstücke gleichzeitig in genau derselben Weise bearbeitet werden. Hierbei kann ein einziger Schieber vorgesehen sein, der die Übertragungselemente sämtlicher Einzelmaschinen gemeinsam steuert, wobei die Steuerung durch dieselbe Schablone hervorgerufen wird.

Mit der erfindungsgemäßen Nutherstellungsmaschine lassen sich auch tieferliegende geschlossene Nuten in überlangen Werkstücken herstellen. Die Maschine kann als Nutstoß- oder als Nutziehmaschine ausgebildet sein.

Weitere Vorteile und Merkmale der Erfindung ergeben sich aus der nachfolgenden Beschreibung und den Unteransprüchen.

Im folgenden wird unter Bezugnahme auf die Zeichnung ein Ausführungsbeispiel der Erfindung näher erläutert.

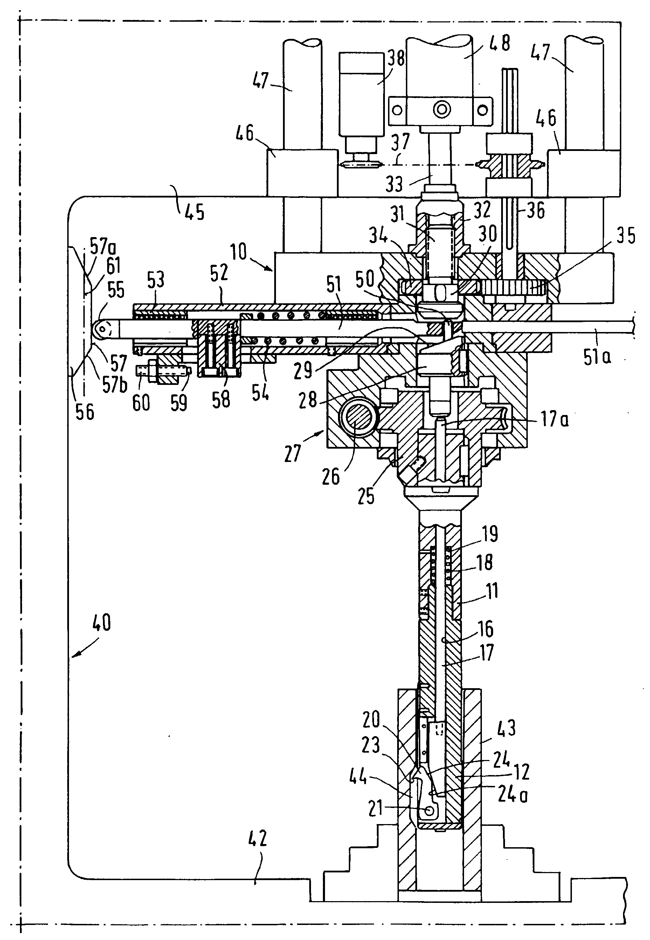

In Fig. 1 ist eine Seitenansicht einer Nutstoßmaschine, teilweise geschnitten, dargestellt. Die Nutstoßmaschine weist einen Rahmen 40 auf, mit einer Basis 42, auf der ein rohrförmiges Werkstück 43 festgespannt werden kann. An der Innenseite des Werkstücks 43 soll eine geschlossene Nut 44 erzeugt werden.

An dem Oberteil 45 des Rahmens 40 sind Führungen 46 für vertikale Schienen 47 angebracht. An den unteren Enden der Schienen 47 ist der Antriebskopf 10 befestigt. Der Antriebskopf 10 kann durch einen Pneumatikzylinder 48 in vertikaler Richtung hin- und herbewegt werden, um Arbeitshübe (abwärts) und Rückhübe (aufwärts) durchzuführen.

Von dem Antriebskopf 10 erstreckt sich ein hohler Schaft 11 nach unten. Das untere Ende des Schaftes 11 ist als selbstführendes Werkzeug 12 ausgebildet, das passend in die Bohrung des Werkstücks 34 eingeführt werden kann. Der Werkzeugteil der Nutmaschine ist generell in gleicher Weise ausgebildet wie in DE 92 06 554 U1 beschrieben.

Der Schaft 11 weist einen durchgehenden längslaufenden Kanal 16 auf, in dem ein Stößel 17 verläuft. Eine in dem Schaft 11 abgestützte Feder 18, die den Stößel 17 umgibt, drückt gegen ein Widerlager 19 am Stößel 17 und treibt den Stößel somit nach oben in Richtung auf den Antriebskopf 10, in den das Ende 17a des Stößels hineinragt.

In dem Werkzeug 12 ist das Nutmesser 20 an einer durch das Werkzeug hindurchgehenden Querachse 21 schwenkbar gelagert. Das Nutmesser 20 besteht aus einem Hebel, der von einer (nicht dargestellten) Druckfeder 22 nach außen gedrückt wird. Das Nutmesser 20 weist eine hakenförmig nach vorne (von dem Antriebskopf fort) gerichtete Schneide 23 auf, mit der die Nut 44 im Werkstück erzeugt wird.

Die Rückfläche des Nutmessers 20 ist als Schrägfläche 24 ausgebildet, an der eine Schrägfläche 24a am Ende des Stößels 17 angreift. Wenn der Stößel 17 in dem Kanal 16 vorgeschoben wird, wird der Hebelarm 20b mit der Schneide 23 aus der Kontur des Werkzeugs 12 herausgeschwenkt. Wird der Stößel 17 dagegen hochbewegt, dann wird das Nutmesser 20 eingezogen.

Der Schaft 11 ist mit einem Schneckenrad 25 fest verbunden, das in dem Antriebskopf 10 mit vertikaler Achse gelagert ist. Dieses Schneckenrad wird von einer Schneckenspindel 26 gedreht, welche Bestandteil eines Teilapparates 27 ist. Die Schneckenspindel 26 wird von einem Motor gesteuert angetrieben, um die Drehwinkelposition des Nutmessers 20 in bezug auf das Werkstück 43 verändern zu können, so daß mehrere umfangsmäßig versetzte Nuten nacheinander an demselben Werkstück erzeugt werden können.

Das obere Ende 17a des Stößels 17 stößt gegen das untere Ende eines Kopfstücks 28, welches drehfest und längsverschiebbar in dem Antriebskopf 10 geführt ist. Dieses Kopfstück 28 weist an seiner Oberseite eine Schrägfläche 29 auf. Der Schrägfläche 29 gegenüber ist die Stirnfläche eines Steuerteils 30 angeordnet. Dieses Steuerteil 30 ist axial zu dem Kopfstück 28 ausgerichtet und es ist drehbar in dem Antriebskopf 10 gelagert. Das Steuerteil 30 ist mit einem Gewindebolzen 31 versehen, der in eine mit dem Antriebskopf 10 fest verbundene Gewindehülse 32 hineinragt. Die Gewindehülse 32 ist mit dem Kolben 33 des Hydraulikzylinders 48 verbunden. Durch Betätigung des Kolbens 48 wird der Antriebskopf 10 zusammen mit dem Schaft 11 hin- und hergehend angetrieben, so daß er mit hoher Frequenz Arbeitshübe und Rückhübe ausführt.

Damit das Nutmesser 20 bei jedem Arbeitshub weiter aus dem Werkzeug 12 herausgefahren werden kann als bei dem vorhergehenden Arbeitshub, kann das Steuerteil 30 gedreht werden, so daß er sich infolge des Gewindeeingriffs des Gewindeschafts 31 mit der Gewindehülse 32 axial verschiebt. Dies wird durch ein Zahnrad 34 bewirkt, welches drehfest mit dem Steuerteil 30 verbunden ist und mit einem ebenfalls im Antriebskopf 10 gelagerten Zahnrad 35 kämmt. Das Zahnrad 35 sitzt auf einer Welle 36, welche über einen Kettentrieb 37 von dem Ausfahrmotor 38 angetrieben wird. Der Ausfahrmotor 38 ist ein Schrittmotor, der nach jedem Arbeitshub um einen vorbestimmten Drehwinkel weiterdreht und dadurch das Steuerteil 30 in axialer Richtung verstellt. Er ist an dem ortsfesten Rahmen 40 befestigt.

Der Stößel 17 drückt das Kopfstück 28 nach oben. Zwischen der Schrägfläche 29 des Kopfstücks und der unteren Stirnfläche des Steuerteils 30 befindet sich ein stiftförmiges Übertragungselement 50, das das Kopfstück 28 von dem Steuerteil 30 auf Abstand hält. Dieses Übertragungselement 50 ragt quer durch eine Bohrung eines Schiebers 51 hindurch. Dieser Schieber 51 erstreckt sich durch ein seitlich von dem Antriebskopf 10 abstehendes Rohr 52 hindurch. Er ist in einer Kugelbuchse 53 gelagert, so daß er nahezu reibungsfrei in dem Rohr 52 längsverschiebbar ist. Eine Feder 54 drückt den Schieber 51 nach außen. Das äußere Ende des Schiebers 51 ist als Tastkopf 55 ausgebildet, hier in Form einer drehbar gelagerten Rolle. Der Tastkopf 55 stößt gegen eine Schablone 56, die ortsfest an dem Rahmen 40 angebracht ist. Die Umfangsfläche 57 der Schablone 56, an der der Tastkopf 55 angreift, hat eine positive Kontur, die der Innenkontur der herzustellenden Nut 44 entspricht, jedoch zu der Nut 44 seitenverkehrt ist.

An dem Schieber 51 ist ein abstehender Ansatz 58 befestigt, der durch einen Schlitz des Rohrs 52 hindurchragt und mit einem Anschlag 59 zusammenwirkt. Der Anschlag 59 ist Bestandteil einer Schraube 60, die axial zu dem Rohr 52 ausgerichtet und an diesem verstellbar befestigt ist. Der Anschlag 59 dient zur Festlegung einer Null-Position des Schiebers 51. Wenn der Ansatz 58 gegen den Anschlag 59 stößt, befindet sich der Tastkopf 55 an einer Null-Linie 61 der Schablone 56.

An dem im Antriebskopf 10 befindlichen Ende weist der Schieber 51 eine Querbohrung auf, durch die das stiftförmige Übertragungselement 50 hindurchgeht. Das Übertragungselement, das das Steuerteil 30 und das Kopfstück 28 auf Abstand hält, liegt mit einer unteren Schrägfläche an der Schrägfläche 29 des Kopfstücks 28 an. Wird der Schieber 51 nach rechts bewegt, so vergrößert sich der Abstand des Kopfstücks 28 von dem Steuerteil 30. Wenn der Tastkopf 55 die Null-Linie 61 der Schablone 56 tangiert, befindet sich die Achse des Übertragungselements 50 koaxial zu der gemeinsamen Achse von Steuerteil 30 und Kopfstück 28. In diesem Zustand kann das Steuerteil 30 von dem Ausfahrmotor 38 gedreht werden, ohne daß eine übermäßige Reibung eintritt, um das Nutmesser 20 um ein Intervall weiter nach außen zu bewegen.

Beim Betrieb der Nutstoßmaschine wird der Antriebskopf 10 von dem Zylinder 48 in einem Maße auf- und abbewegt, das größer ist als die Länge der zu erzeugenden Nut 44. Nach Beendigung jedes Rückhubes (Aufwärtsbewegung) wird der Ausfahrmotor 38 in Funktion gesetzt, um das Steuerteil 30 ein Stück weit nach unten zu bewegen und dadurch über den Stößel 17 das Nutmesser 20 geringfügig aus dem Werkzeug 12 herauszuschieben. Dann erfolgt der abwärtsgerichtete Arbeitshub, bei dem der Tastkopf 55 zunächst auf der Flanke 57a der Schablone 56 läuft, wodurch der Stößel 51 nach links geschoben wird. Hierdurch wird der Stößel 17 nach unten gedrückt, so daß die Schneide 23 des Nutmessers 20 die obere Flanke der Nut 44 erzeugt. Wenn der Tastkopf 55 am Ende der Abwärtsbewegung entlang der Flanke 57b läuft, wird die untere Nutflanke erzeugt. In der Zeichnung ist der Zustand dargestellt, daß das Übertragungselement 50 von dem Tastkopf 55 aus der Mitte herausgestellt wurde und seine größte Achsentfernung einnimmt, so daß die Schneide des Nutmessers den Nutgrund bearbeitet. Nachdem der Tastkopf 55 die Null-Linie 61 am unteren Ende der Schablone erreicht hat, wird das Übertragungselement 50 durch die Feder 54 wieder auf die Mittelachse zurückgestellt. Bei dem anschließenden Rückhub läuft der Tastkopf 55 wieder über die Schablone 56. Alternativ besteht die Möglichkeit, beim Rückhub den Tastkopf neben der Schablone herlaufen zu lassen oder die Schablone kurzzeitig zu entfernen, so daß das Nutmesser 20 eingefahren bleibt. Vor dem nächsten Arbeitshub wird wiederum das Steuerteil 30 nachgestellt, so daß die bereits erzeugte Nut 44 vertieft wird. Auf diese Weise wird durch zahlreiche Arbeitshübe und Rückhübe die Nut gestoßen.

In der Zeichnung ist dargestellt, daß der Schieber 51 mit einer Verlängerung 51a versehen ist, die an der gegenüberliegenden Seite aus dem Antriebskopf 10 herausragt und zu einem benachbarten Antriebskopf führt. Sämtliche Antriebsköpfe der Nutstoßmaschine sind synchron angetrieben, wobei eine einzige Schablone 56 zur Steuerung des Nutungsprofils sämtlicher Antriebsköpfe bzw. Werkzeuge benutzt wird.

## Patentansprüche

1. Nutherstellungsmaschine mit
einem axial bewegbaren Antriebskopf (10) mit einem davon abstehenden hohlen Schaft (11),
einem an dem Schaft (11) vorgesehenen Werkzeug (12), das in eine Werkstückbohrung einführbar ist und ein seitlich herausbewegbares Nutmesser (20) aufweist,
einem relativ zu dem Antriebskopf (10) gesteuerten, axial verstellbaren Steuerteil (30),
einem durch das Steuerteil (30) in dem Schaft (11) verschiebbaren Stößel (17) zum graduellen Herausbewegen des Nutmessers (20) aus dem Werkzeug (12),
einem zwischen Steuerteil (30) und Stößel (17) angeordneten Übertragungselement (50), das quer zu der Längsachse des Stößels (17) verschiebbar ist und bei Verschiebung den Abstand zwischen Steuerteil (30) und Stößel (17) verändert,
und einem an dem Antriebskopf (10) geführten, das Übertragungselement (50) seitlich verschiebenden Schieber (51), der an einer ortsfesten Schablone (56) abgestützt ist und während einer Hubbewegung des Antriebskopfes (10) die seitliche Bewegung des Nutmessers (20) entsprechend der Form der Schablone (56) steuert.

2. Nutherstellungsmaschine nach Anspruch 1, dadurch gekennzeichnet, daß der Schieber (51) mit einem Anschlag (59) auf eine Null-Position (61) einstellbar ist, in der das Übertragungselement (50) sich in axialer Ausrichtung mit dem Stößel (17) befindet.

3. Nutherstellungsmaschine nach Anspruch 1 oder 2, dadurch gekennzeichnet, daß der Schieber (51) mit einer Feder (54) in Richtung auf die Schablone (56) vorgespannt ist.

4. Nutherstellungsmaschine nach einem der Ansprüche 1-3, dadurch gekennzeichnet, daß mehrere Antriebsköpfe (10) synchron zueinander angetrieben oder miteinander verbunden sind und jeweils ein Übertragungselement (50) enthalten, wobei alle Übertragungselemente (50) von einer gemeinsamen Schablone (56) gesteuert sind.

5. Nutherstellungsmaschine nach einem der Ansprüche 1-4, dadurch gekennzeichnet, daß das Steuerteil (30) in Gewindeeingriff mit dem Antriebskopf (10) steht, und daß ein Drehantrieb (38) zum schrittweisen Drehen und axialen Verstellen des Steuerteils (30) vorgesehen ist.

6. Nutherstellungsmaschine nach Anspruch 5, dadurch gekennzeichnet, daß der Drehantrieb (38) nur dann für einen Antriebsschritt gesteuert ist, wenn sich das Übertragungselement (50) in axialer Ausrichtung mit dem Stößel (17) befindet.

7. Nutherstellungsmaschine nach einem der Ansprüche 1-6, dadurch gekennzeichnet, daß ein gegen den Stößel (17) drückendes, drehfest in dem Antriebskopf (10) geführtes Kopfstück (28) eine Schrägfläche (29) zur Abstützung des Übertragungselements (50) aufweist.

8. Nutherstellungsmaschine nach einem der Ansprüche 1-7, dadurch gekennzeichnet, daß an dem Antriebskopf (10) ein Teilapparat (27) vorgesehen ist, der den Schaft (11) relativ zu dem Antriebskopf (10) gesteuert dreht, um unterschiedliche Drehstellungen des Nutmessers (20) einzustellen.
